# EUROPEAN PATENT SPECIFICATION

(11) **EP 2 591 924 B1**
(45) Date of publication and mention of the grant of the patent: **15.10.2014**
(21) Application number: 11803288.7
(22) Date of filing: 27.06.2011
(51) Int. Cl.: B60C 13/00, B60C 13/04, B60C 13/02

(54) **TIRE**
REIFEN
PNEUMATIQUE

(30) Priority: 14.10.2010 JP 2010231661; 04.10.2010 JP 2010224988; 15.09.2010 JP 2010206533; 10.09.2010 JP 2010203609; 08.07.2010 JP 2010155401
(43) Date of publication of application: 15.05.2013
(60) Divisional application: 14173098.6
(73) Proprietor: Bridgestone Corporation, Tokyo 104-8340 (JP)
(72) Inventor: KAWAI, Seiichirou, Kodaira-shi Tokyo 187-8531 (JP); OGAWA, Yuichiro, Kodaira-shi Tokyo 187-8531 (JP); MIYASAKA, Atsushi, Kodaira-shi Tokyo 187-8531 (JP); IWABUCHI, Sotaro, Kodaira-shi Tokyo 187-8531 (JP); HIMURO, Yasuo, Tachikawa-shi Tokyo 190-0031 (JP); ITOI, Daita, Kodaira-shi Tokyo 187-8531 (JP)
(74) Representative: Lamb, Martin John Carstairs
(86) International application number: PCT/JP2011/003654
(87) International publication number: WO 2012/004947

(56) References cited:
- JP-A- 8 318 715
- JP-A- 59 190 010
- JP-A- 2002 307 914
- JP-A- 2004 136 617
- JP-A- 2007 212 945
- JP-A- 2008 247 193
- JP-A- 2009 096 212
- JP-A- 2010 036 725
- US-A1- 2007 044 886

## Description

### TECHNICAL FIELD

The present invention relates a pneumatic tire and a solid tire that are improved to have a display part, which is provided on a tire side portion by means of printing and painting, less susceptible to dirt and damage, so as to effectively protect the display part.

### BACKGROUND ART

A display part having emblems such as characters and symbols or a decorative band such as a color line, which are disposed on a tire side portion, has been applied by means of printing or painting, application of a decorated sticker, or by means of a color rubber disposed as being embedded, so as to enhance the visibility of the display and to improve the decorativity of the tire. When the aforementioned tire is mounted on a vehicle and driven, the side portion of the tire is rubbed against a curb or the like, leading to damage caused to the display part or peeling off of the display. In view of this, there has been proposed, as in disclosed in Patent Literature 1 for example, a method of using ink containing a binder suited for a rubber material of a desired display region, to thereby improve the durability of the display part.

### CITATION LIST

### Patent Literature

PTL 1: JP 2000-510191 A

Attention is also drawn to the disclosure of US2007/044886.

### SUMMARY OF INVENTION

### (Technical Problem)

Meanwhile, in the case of using different types of ink depending on the rubber material of the display part for the purpose of improving display performance, there is a need to provide various types of ink in advance correspondingly to the types of the rubber materials of the display site and to have the ink stored and managed. In a method of applying a sticker or the like as the display part, there is no need to newly select a sticker according to the change in rubber material, but there remains a fear that the sticker will come off relatively easily when rubbed against a curb or the like during use.

On the other hand, the display part formed of a color rubber disposed as being embedded in the side portion exhibits relatively high strength against the rubbing of a curb or the like. However, the display part thus formed becomes relatively monotonous in color. Further, even a case of applying a sticker as the display part, which offers comparatively greater flexibility in decorativity, still falls short of satisfying the demand for higher decorativity, and thus, there has been made not so much difference from other tires to take enough advantage thereof.

Therefore, there has been a strong demand for a tire that has high decorativity while being highly resistant to dirt and damages.

An object of the present invention is to provide a tire with increased visibility of a display part of the tire, which is also improved in decorativity of the tire, and further, to provide a tire capable of making the display part less susceptible to dirt and damages to thereby maintain good appearance of the display part over a long period.

### (Solution to Problem)

A tire according to the present invention as claimed in claim 1.

Here, in the present invention, the "emblem" may be formed of one type of characters, symbols, patterns, and graphics, or may be formed of at least two types thereof. Further, the term "decorative band" refers to a line-shaped region that is formed different from the tire side portion therearound in terms of sectional shape, pattern, color, and the like.

In a tire including, on a tire side portion, a projection protruding from a display part, even when the display part has its surroundings rubbed against a curb or the like during the use of the tire, the projection is brought into contact with the curb ahead of the display part, to thereby effectively protect the display part against damages.

Further, in the case where the display part is surrounded by the projection, the display part can be more effectively protected.

Further, the projection formed as an elongated protrusion extending at least one of radially inside and outside of the display part is capable of reliably protecting the display part along the whole circumference even when the display part annularly continues in the tire circumferential direction.

Furthermore, the projection formed as two elongated protrusions extending both radially inside and outside across the display part therebetween is capable of surrounding the aforementioned annular display part along the whole circumference, to thereby more reliably protect the display part.

Meanwhile, when a spew to be generated on the tire side surface is formed on the projection avoiding the display part, it becomes easy to form display by means of printing or painting, without the need to perform post-processing to remove the spew from the display part, and further, the quality of the display can be sufficiently enhanced. On the other hand, the spew on the projection is less noticeable even if sticking out to a certain extent from the projection, and thus the removal of the spew 7 can be performed faster.

Then, in the case where the decorative band is formed as a protrusion protrudingly formed on an outer surface of the tire side portion and colored parts different from each other in color are respectively formed on a pair of side surfaces of the protrusion, different colors can be visually identified depending on the viewing angle so that the side portion of the tire can be emphasized, to thereby enhance the decorativity of the tire.

In particular, when the decorative band is formed triangular or rectangular in section, the colors of the side surfaces of the decorative band can also be visually identified even when the decorative band is viewed from directly above the tire (that is, in a direction along the side portion surface), to thereby further increase the visibility of the display part and the decorativity of the tire.

Further, when the decorative band is extended along the tire circumferential direction, the different colors applied to the decorative band can each be visually identified reliably.

Here, when the emblem to be attached to the tire is disposed adjacent to the decorative band, the contrast to be effected between the emblem and the decorative body can be increased so as to further improve the visibility of the emblem.

Then, in the case where the edges of the colored part are disposed on the inclined surfaces, coloring irregularities generated at the edges of the colored part can be visually identified as being compressed due to the inclination of the inclined surfaces, so that the disturbance at the boundaries of the colored part can be made less noticeable.

Further, in a case where the inclined surface is formed as a side surface of the protrusion protrudingly formed on the outer surface of the tire side portion, the surface of the side portion is less likely to suffer stress concentration resulting from the deflection of the side portion when the tire is rolled under load, as compared to a case where a depression is formed in the side portion to form the inclined surface. Accordingly, the generation of cracks in the surface of the side portion can be suppressed.

### BRIEF DESCRIPTION OF DRAWINGS

The present invention will be further described below with reference to the accompanying drawings, wherein:
FIGS. 1 each illustrate a tire in partial sectional view in the tire meridian direction, according a first embodiment which is not according to the present invention, but which is useful for understanding the present invention, in which: FIG. 1(a) is a sectional view illustrating only a left half of the tire from the center in the width direction; and FIG. 1(b) is a main part enlarged view illustrating a case where projections are formed as protruding from the outer surface of a display part in a part A of FIG. 1(a);
FIG. 2 is a main part enlarged sectional view of a modified example of FIG. 1(b), for illustrating a case where a side portion itself is configured as a projection with the display part being recessed relative to the outer surface of the side portion;
FIG. 3 is a perspective view illustrating another embodiment of a tire which is not according to the present invention, but which is useful for understanding the present invention;
FIGS. 4 each illustrate further another embodiment of a tire which is not according to the present invention, but which is useful for understanding the present invention, in which: FIG. 4(a) is a perspective view; and FIG. 4(b) is a partial sectional view in the meridian direction;
FIGS. 5 each illustrate still further another embodiment of a tire which is not according to the present invention, but which is useful for understanding the present invention, in which: FIG. 5(a) is a perspective view; FIG. 5(b) is a partial sectional view in the meridian direction of the projection that is triangular in section; FIG. 5(c) is a partial sectional view in the meridian direction of the projection that is trapezoidal in section; and FIG. 5(d) is a partial sectional view in the meridian direction of the projection that is semicircular in section;
FIG. 6 is a main part enlarged sectional view in the meridian direction of a tire according to further another embodiment which is not according to the present invention, but which is useful for understanding the present invention;
FIG. 7 is a side view and a partial enlarged view illustrating a tire according to a second embodiment, which is in accordance with the present invention;
FIG. 8 is a sectional view taken along the line A-A of FIG. 7;
FIG. 9 is a partial side view of a tire according to a third embodiment, which is according to the present invention;
FIG. 10 is a partial sectional view in the tire meridian direction of the tire of FIG 9;
FIGS. 11 each are a main part enlarged view of a part *B* of FIG. 10 for indicating a region where a colored part of a decorative band is to be arranged, in which: FIG. 11(a) illustrates the colored part disposed on a surface of the projection; and FIG. 11(b) illustrates the colored part disposed on a surface of the depression;
FIG. 12(a) is a schematic view illustrating an exaggerated contour in the meridian direction of a tire used as Example; FIG. 12(b) is a partial enlarged view of the tire provided with a depression; and FIG. 12(c) is a partial enlarged view of the tire provided with a protrusion;
FIG. 13 is a side view and a partial enlarged view of a tire according to a fourth embodiment, which is according to the present invention;
FIG. 14 is a partial enlarged sectional view taken along the line A-A of FIG. 13; and
FIGS. 15(a) to 15(e) each are a partial sectional view of a tire according to another embodiment of the present invention, which is illustrated in the same section as in FIG. 14.

### DESCRIPTION OF EMBODIMENTS

In the following, a first embodiment, which is not according to the present invention, but which is useful for understanding the present invention is specifically described with reference to the accompanying drawings.

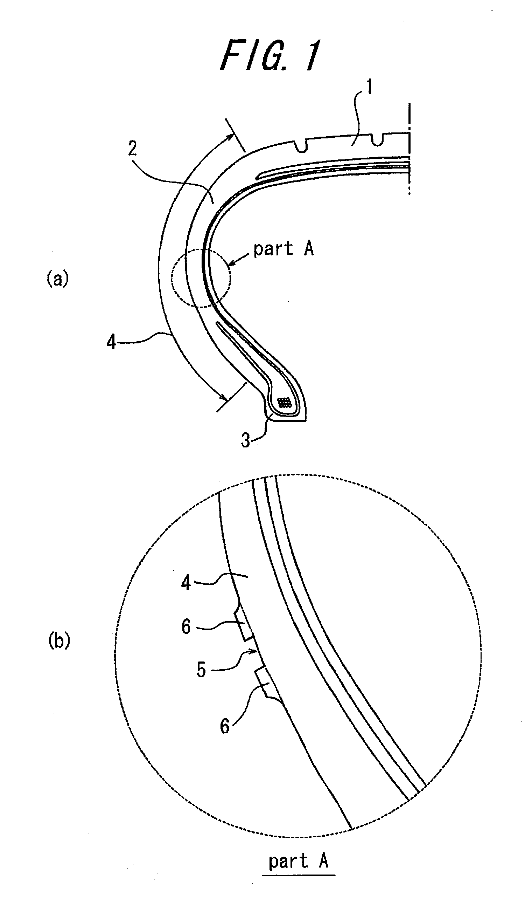

A pneumatic tire exemplified in FIGS. 1 includes: a tread portion 1 of the tire; a pair of sidewall portion 2 each continuing from each of the side portions of the tread portion 1 and extending radially inward; a bead portion 3 continuing from each sidewall portion 2 and extending radially inward; and a tire side portion 4. The term "tire side portion 4" used herein refers to a region ranging from the outer edge in the tire width direction of the tread surface to the rim contact area of the bead portion 3.

The tire side portion 4 is provided with a display part 5 which includes: an emblem for rendering, by means of characters, symbols, patterns, and graphics, the name of the manufacturer of the tire and the brand name of the tire; and a decorative band formed mainly for a decorative purpose, which is different in sectional shape, pattern, color, and the like, from the tire side portion 4 therearound. The display part 5 may be formed by any of various methods generally available, and the present invention employs any of the following methods. That is, the display part may be printed, painted, or applied as a sticker. Alternatively, the display part may be formed of a color rubber, which is incorporated in a greentire together with a cover rubber, so that the cover rubber is scraped by a grinder or the like to be removed therefrom after the tire is vulcanized so as to expose the color rubber.

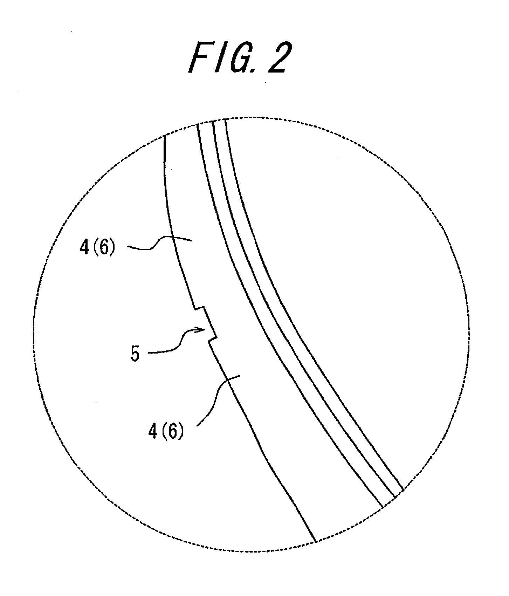

The tire side portion 4 has a projection 6 in a region adjacent to the display part 5, the projection 6 protruding relative to the display part surface. Here, as illustrated in FIG. 1(b), the projection 6 may be formed as being raised so as to be protrude from the outer surface of the tire side portion 4. Alternatively, as illustrated in FIG. 2, a site where the display part 5 is to be formed may itself be recessed relative to the outer surface of the tire side portion 4, with the result that the tire side portion 4 itself is configured as the projection 6. In view of reducing weight of the tire without impairing various performances of the tire, the thickness of the tire side portion 4 may preferably be reduced to minimum, while raising only the sites adjacent to the display part to form the projection 6. Further, the projection 6 thus formed also serves as a guide in coloring in the case of forming the display part 5 by means of printing or painting, which can prevent ink or paint from flowing out of a desired range.

In the tire configured as described above, the projection 6 protrudes outward in the tire width direction than the display part 5 when the tire is mounted on a vehicle and driven, and hence, even when the tire is rubbed against a curb or the like, the projection 6 is brought into contact with the curb ahead of the display part 5, so that the display part 5 can be effectively protected against damages and dirt.

The projection 6 may be partially provided at least one location in the vicinity of an outermost part in the tire width direction of the display part 5. This configuration can keep the projection 6 to a bare minimum required for protecting the most vulnerable site of the display part 5.

The projection 6 may also be formed to surround the display part 5. With this configuration, the projection 6 is always brought into contact with a curb or the like ahead of the display part 5 regardless of whether the tire is rubbed against the curb in either direction along the outer surface of the tire side portion 4.

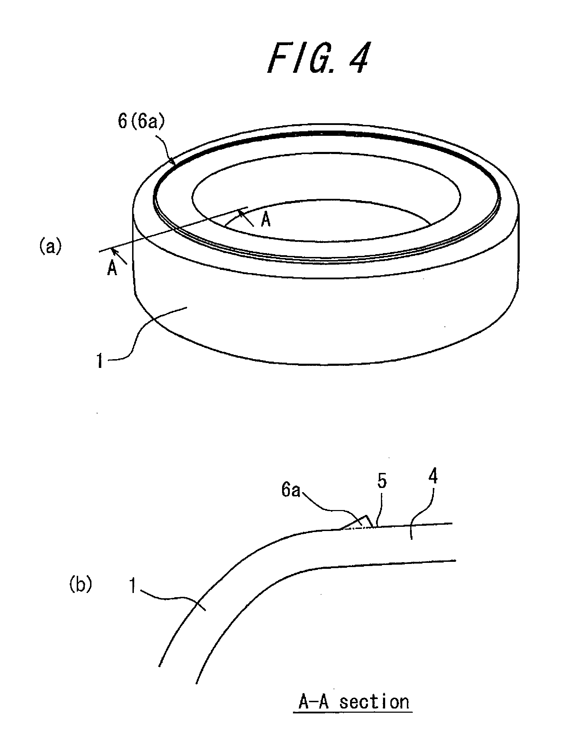

The projection 6 may be formed as one annular elongated protrusion 6a as illustrated in FIGS. 4(a) and 4(b), and the elongated protrusion 6a may be disposed on one of the sides in a radial direction of the display part 5. This configuration is capable of reliably protecting specifically the display part 5 that annularly extends along the tire circumferential direction, throughout the entire circumference of the tire. Although the elongated protrusion 6a is disposed radially outside the display part 5 in the drawing, the elongated protrusion 6a may also be disposed only radially inside the display part 5.

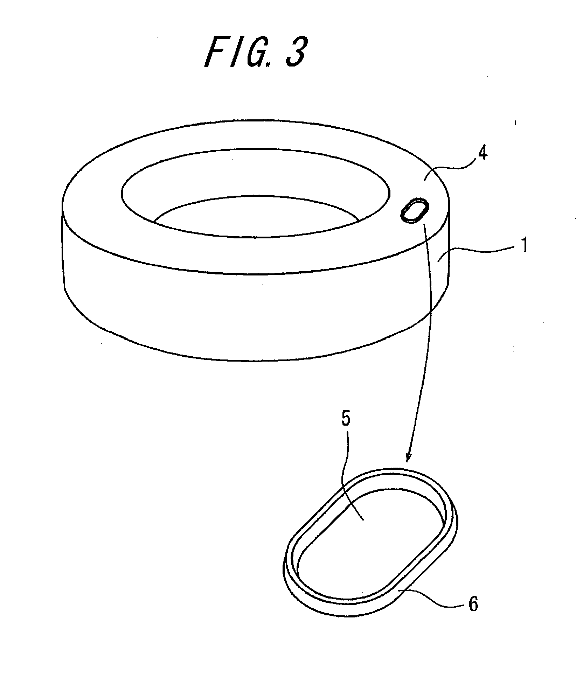

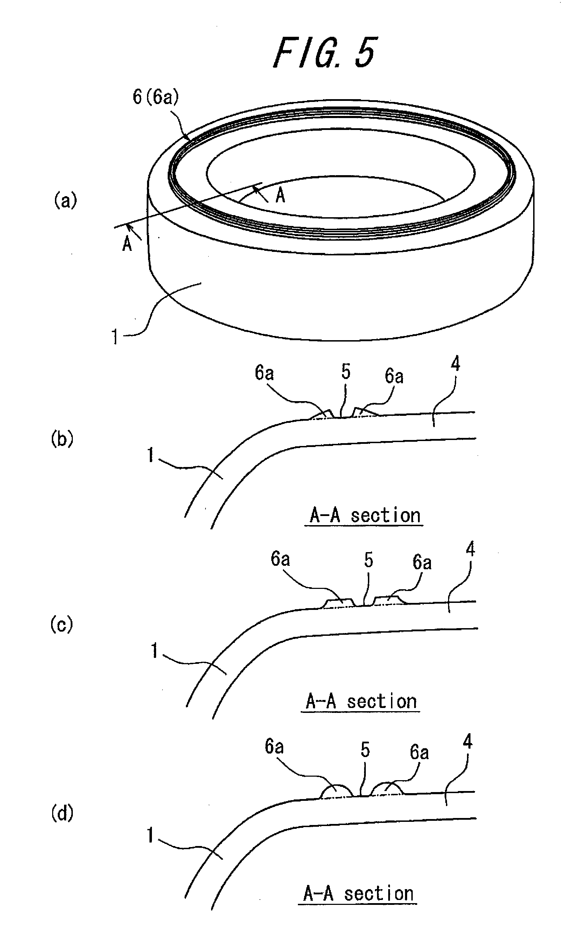

The projection 6 may be formed as two annular elongated protrusions 6a disposed on both sides in the radial direction as illustrated in FIGS. 5(a) and 5(d), so that the display part 5 may be sandwiched between the two elongated protrusions 6a. In this case, the annular display part 5 is surrounded across the entire region where the display part 5 is formed, so that the display part 5 can be more effectively protected as in the case of FIG. 3. Here, the elongated protrusions 6a may be intermittently provided as necessary.

The projection 6 may be triangular, trapezoidal, or semicircular in section along the tire meridian as illustrated in, for example, FIGS. 5(b) to 5(d). In these cases, the projection also contributes to enhancing decorativity, in combination with the decoration of the display part 5.

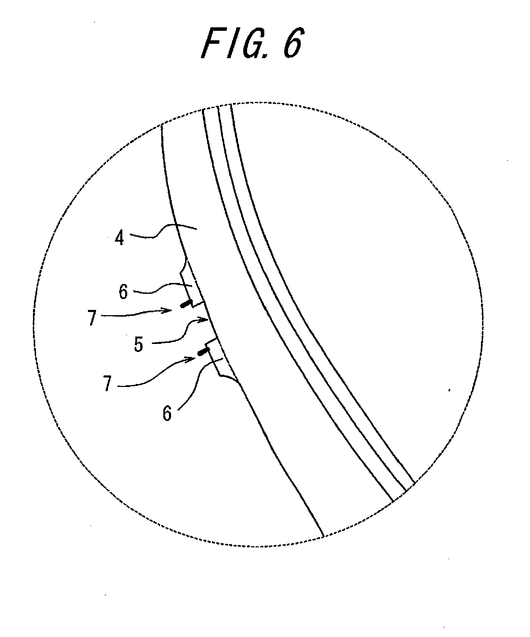

A vulcanizing mold for vulcanizing the tire has a vent hole for the purpose of preventing the intrusion of air into the tire and the generation of bare on the tire surface, which results in a spew 7 formed on the tire side portion 4. As exemplified in FIG. 6, the spew 7 may preferably be formed on the projection 6, avoiding the display part 5. This configuration eliminates the need to perform post-processing to completely remove the spew 7 in the case of forming afterward the display part 5 by means of printing, painting, or application of a sticker, and therefore has no variations resulting from the post-processing, which leads to further improvement in quality of the display either printed or painted. Meanwhile, the spew 7 formed on the projection 6 is less noticeable even if sticking out to a certain extent from the surface of the projection 6 while the removal of the spew 7 is easy, and thus the removal of the spew 7 can be performed faster.

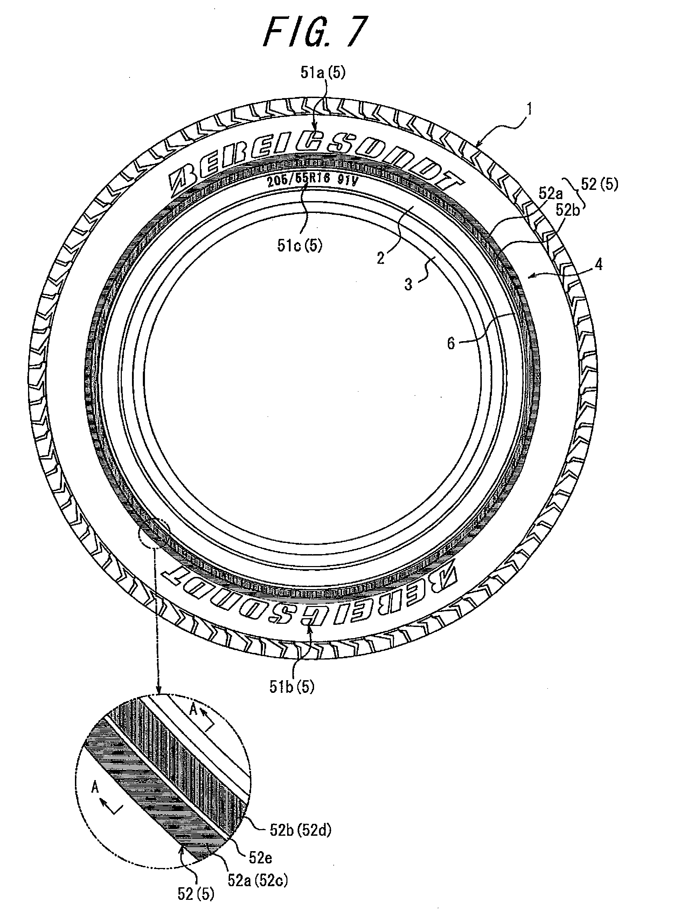

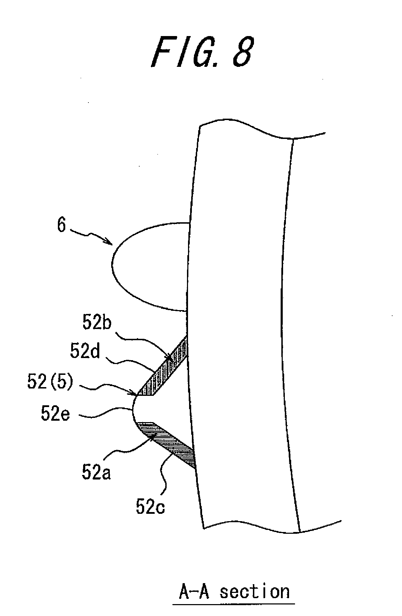

FIGS. 7 and 8 each illustrate a tire according to a second embodiment, which is according to the present invention, in which features similar to those of the first embodiment are denoted by the same reference symbols, and the description thereof is omitted herein.

In the embodiment of FIG. 7, smooth-surfaced emblems 51a and 51b each rendering the company name or the like are provided by means of printing on the outer surface radially outside relative to a tire maximum width position of the tire side portion 4, while an emblem 51c rendering the tire size or the like is formed on the outer surface radially inside relative to the tire maximum width position. In this case, when displaying a tire size or the like, if there is a need to provide the emblem as a concave-convex surface depending on various industrial standards applicable to a region where the tire is produced or used, the emblem is formed according to the standard. In this embodiment, an inside region edged by a concave-convex surface is printed, to thereby form the emblem 51c.

Here, the term "tire maximum width position" refers to, when the tire is a solid tire, a maximum width position between the side portion surfaces excluding any patterns, characters, and the projection 6 formed on the tire side surface, and the term also refers to, when the tire is a pneumatic tire, a maximum width position between the sidewalls similarly excluding any patterns, characters, and the projection 6 on the side surface of an unloaded tire which is attached to an applicable rim and filled with a specified air pressure. Here, the term "applicable rim" refers to a rim specified as follows according to the size of the tire, the term "specified air pressure" refers to an air pressure specified corresponding to a maximum load carrying capability under the following specifications; and the maximum load carrying capability refers to a maximum mass allowed to be applied as a load to the tire under the following specifications. The "air" herein can be replaced by inert gas such as nitrogen gas and other type of gases.

Further, the standard refers to an industrial standard effective in a region where the tire is produced or used. The examples thereof may include: "YEAR BOOK" of the Tire And Rim Association, Inc. in the United States; "STANDARDS MANUAL" of the European Tyre and Rim Technical Organisation in Europe; and "JATMA YEAR BOOK" of the Japan Automobile Tyre Manufacturers Association in Japan.

Then, the feature of the tire resides in that, as illustrated in FIGS. 7 and 8, the tire includes, on the surface of the tire side portion 4, a decorative band 52 having a pair of side surfaces 52a, 52b on the inside and the outside in a tire radial direction, the side surfaces 52a, 52b in a pair each being provided with colored parts 52c, 52d, respectively, that are different from each other in color, and the aforementioned emblems 51a to 51c and the decorative band 52 together form the display part 5. The colored parts 52c, 52d of the decorative band 52 may be colored in any color even including white and black, by means of either printing, painting, a sticker, or exposure of a color rubber. The colored parts 52c, 52d herein are formed by color printing.

The decorative band 52 is formed triangular in section along the tire meridian as illustrated in FIG. 8, and continuously extends along the tire circumferential direction. Further, the decorative band 52 is disposed adjacent to the inside in the tire radial direction of the emblems 51a, 51b of FIG. 7. Here, the decorative band 52 may be formed, for example, rectangular such as trapezoidal in section. Further, the projection 6 is formed, for example, semicircular in section in the example of FIG. 8, with an apex thereof protruding outward than the decorative band 52 in the tire width direction.

The colored parts 52c, 52d of the decorative band 52 may be colored in any combination, as long as the colors are different from each other. For example, the colored part 52c disposed outside in the tire radial direction may be colored white while the colored part 52d disposed inside in the tire radial direction may be colored red, although the present invention is not limited thereto. Alternatively, the combination of colors may render the corporate identity or visual identity that stands for the product, the brand, and the corporate name.

In the tire configured as described above, the colored parts 52c, 52d are visually identified as different colors when viewed from different angles so as to make the side portion 4 of the tire highly visible, which improves the external appearance of the tire. Further, the contrast effected between the decorative band 52 and the emblems 51a, 51b can improve the visibility of the emblems 51 a, 51 b.

In particular, in the embodiment illustrated in FIGS. 7 and 8, the decorative band 52 is formed triangular in section, which makes it possible to visually identify the colors of the colored parts 52c, 52d of the decorative band 52 even when the decorative band 52 is viewed from directly above (that is, when viewed along the surface of the side portion 4), to thereby further increase the visibility of the emblems 51a, 51b and the external appearance of the tire. The decorative band 52 herein has, at the apex thereof, a curved surface 52e that continues to both of the side surfaces 52a, 52b, and the curved surface 52e may also be colored in different color from those of the pair of side surfaces 52a, 52b. This case leads to further improvement in external appearance of the tire and in visibility of the emblems 51a, 51b when viewed from the tire side surface side.

Further, in the tire configured as described above, the decorative band 52 continuously extends along the tire circumferential direction, to thereby ensure that the different colors applied to the side surfaces 52a, 52b of the decorative band 52 can both be visually identified reliably. The decorative band 52 may be intermittently provided as necessary.

Further, in the tire configured as described above, the emblems 51a, 51b attached to the tire is disposed in a position adjacent to the decorative band 52, so that the contrast effected between the emblems 51a, 51b and the decorative band 52 is further increased, to thereby further improve the visibility of the emblems 51a, 51b.

Although the decorative band 52 in the aforementioned example is exemplified as one elongated protrusion that continues in the tire circumferential direction, there may be provided a plurality of decorative bands 52 inside and outside in the tire radial direction. Further, the emblems 51a, 51b may include characters in a single color or in a color gradation delivered by varying at least one of brightness, hue, and intensity. For example, although not shown, the emblems 51a, 51 b may include characters that are basically colored white, which is continuously or stepwisely darkened in brightness at the contour of each character toward the outside, using a smaller amount of ink, so that the characters are printed and colored in a color assimilating into the base color of the tire (color of black rubber), to thereby render gradation at the contour of each character so as to blur the boundaries of the characters. This way makes it difficult to identify irregularities in printing and abrasion at the boundary between the characters and the base region where the emblems 51a, 51b are disposed on the side portion surface of the tire, to thereby maintain good external appearance.

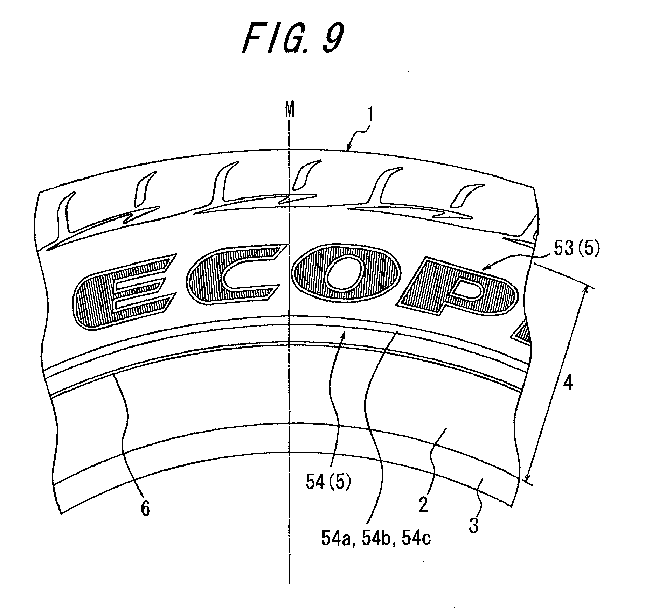

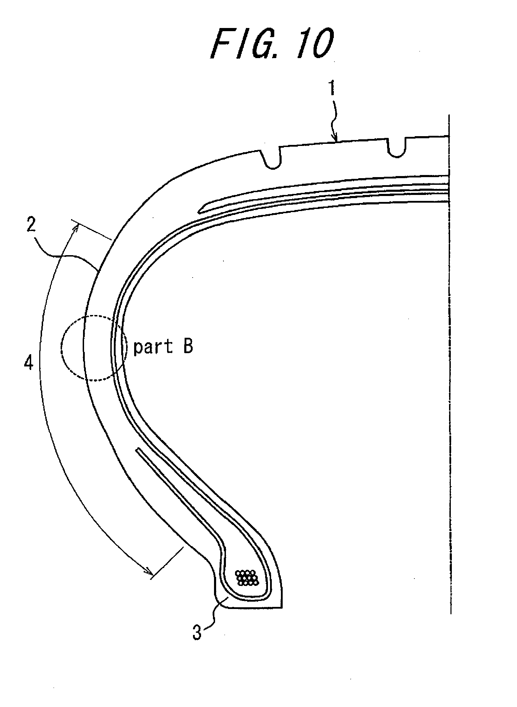

FIGS. 9 to 12 each illustrate a tire according to a third embodiment, which is according to the present invention, in which features similar to those of the first embodiment are denoted by the same reference symbols and the description thereof is omitted.

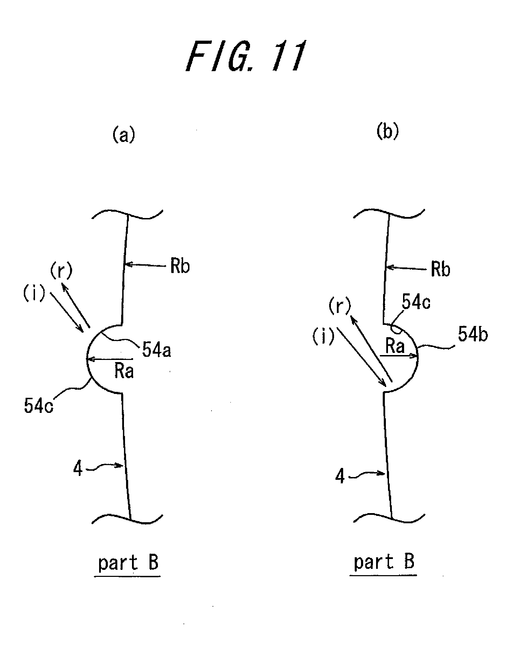

In the embodiment of FIG. 9, the tire side portion 4 includes, as the display part 5, an emblem 53 and a decorative band 54. The decorative band 54 is formed as illustrated in enlarged views of FIGS. 11(a) and 11(b), in which the tire side portion 4 has, on an outer surface thereof, an annular protrusion 54a formed as protruding outward in the tire width direction, or an annular depression 54b formed as being depressed inward in the tire width direction, the protrusion 54a or the depression 54b each having a colored part 5c on a surface thereof, which is different in color from surrounding rubber. The protrusion 54a and the depression 54b, which may preferably be formed continuously in the tire circumferential direction, may also be provided intermittently as necessary.

The aforementioned tire is to be generally viewed from obliquely above with respect to the tire when mounted on a vehicle. Here, in the case where the colored part 54c is formed on a surface of the protrusion 54a as illustrated in FIG. 11(a), light incident on the upper half of the surface of the protrusion 54a is reflected in a direction (direction of the arrow *r* of the drawing) substantially the same as the incident direction (direction of the arrow *i* of the drawing) of light incident on the tire from obliquely above (retroreflection), with the result that the upper half of the surface of the protrusion 54a appears particularly bright. For this reason, as compared to the case where the colored part 54c is formed on a flat surface of the tire, the colored part 54c is further enhanced in color and appears brighter. On the other hand, in the case where the colored part 54c is formed on a surface of the depression 54b as illustrated in FIG. 11(b), light incident on the lower half of the surface of the depression 54b is reflected in a direction (direction of the arrow *r* of the drawing) substantially the same as the incident direction (direction of the arrow *i* of the drawing) of light incident on the tire from obliquely above (retroreflection), with the result that the lower half of the surface of the depression 54b appears particularly bright, which makes it possible to enhance the color of the colored part 54c as in the case of the protrusion 54a.

Then, in a case where the protrusion 54a or the depression 54b has a surface shape formed in an arc-shaped cross section and the curvature radius *Ra* in a tire meridian section of the protrusion 54a or the depression 54b has an absolute value smaller than the absolute value of the curvature radius *Rb* in a tire meridian section of the tire side portion 4, either the protrusion 54a or the depression 54b can reflect light more intensely, to thereby further enhance the color of the colored part 54c.

Furthermore, when the protrusion 54a or the depression 54b is made to have a smaller surface roughness, scattered reflection of light can be suppressed, so that light can be reflected further intensely. For this reason, the vulcanizing mold of the tire may preferably have a mirror-finished vulcanizing area in part which corresponds to the protrusion 54a or the depression 54b.

In addition, in a case where the colored part 54c is formed by means of printing on a surface of the protrusion 54a or the depression 54b, or in a case where the colored part 54c is formed by scraping off the tire surface to expose a color rubber that has been disposed as being embedded beforehand, the decorative band can be formed at lower cost as compared to a case where the decorative band is applied as a sticker.

In the case where the colored part 54c is formed inside the depression 54b, the colored part 54c is less susceptible to dirt and damages, as compared to a case where the depression is provided to the protrusion 54a, which allows the decorativity of the tire to be maintained longer.

### EXAMPLES

Next, conforming tires 1 to 2 according to the third embodiment and a reference tire to serve as a conventional example were manufactured as samples, which were visually inspected to evaluate the brightness, to thereby investigate the decorativity of each tire. The results thereof are shown in Table 1. Here, the decorativity herein is represented as an index derived for the brightness of the decorative band of each tire using, as a control, the investigation result obtained for the reference tire serving as a conventional example. The decorative band looks brighter as the number becomes larger.

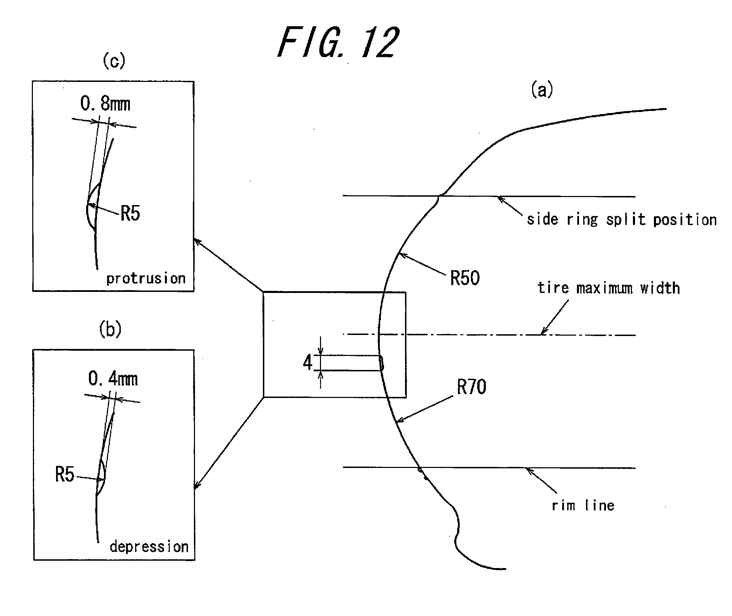

Here, the conforming tire 1 was in the size of 195/65R15, and had a protrusion illustrated in FIGS. 12 formed on a tire side portion of the tire, the protrusion having a curvature radius of 5 mm and a height of 0.8 mm in the tire meridian section, in which a green colored part was provided by means of printing onto the surface of the protrusion. The rubber of the conforming tire 1 was colored black, and the tire side portion had a curvature radius of 70 mm in the tire meridian section.

Further, the conforming tire 2 had a depression formed thereon in place of the protrusion of the conforming tire 1, the depression having a radius of curvature of 5 mm and a depth of 0.4 mm

Then, the reference tire was equivalent to the conforming tire 1 except in that the colored part was formed on a flat surface of the tire side portion. The same ink was used for printing in any of these tires, and the tires were the same in surface roughness at a site where the decorative band was disposed.

**[Table 1]**

| | Reference Tire | Conforming Tire 1 | Conforming Tire 2 |
|---|---|---|---|
| Decorativity of Tire | 100 | 130 | 120 |

The results made it clear that the colored part of both of the tire having the colored part formed on the surface of the protrusion of the tire side portion (conforming tire 1) and the tire having the colored part formed on the surface of the depression of the tire side portion (conforming tire 2) looked brighter as compared to that of the conventional tire, and thus the conforming tires 1 and 2 were more excellent in decorativity of the tire than the conventional tire.

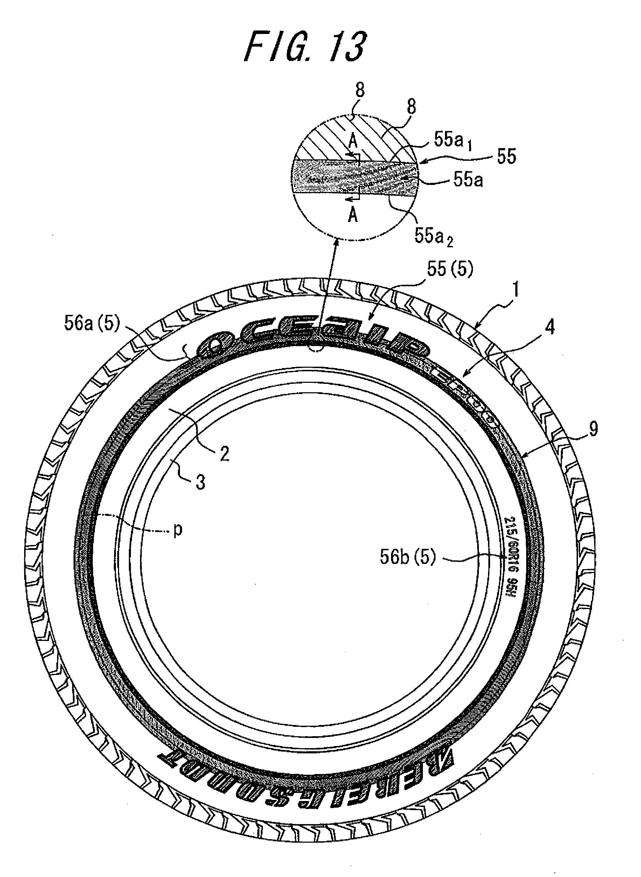

FIGS. 13 to 15 each illustrate a tire according to a fourth embodiment, which is according to the present invention, in which features similar to those of the first embodiment are denoted by the same reference symbols, and the description thereof is omitted herein.

The embodiment of FIG. 13 has a ridge arrangement region 9 on a surface of at least one of the tire side portions 4, the ridge arrangement region 9 including a plurality of ridges 8 extending in a predetermined direction in a predetermined form to be arranged in an annular shape concentric with the tire axis.

Further, a colored part 55a of a decorative band 55 is disposed on the inner circumference side, that is, radially inside relative to the ridge arrangement region 9, and also radially inside relative the tire maximum width position p, as being adjacent to the ridge arrangement region 9, the colored part 55a extending in an annular shape intermittently or continuously (continuously in the illustrated example) concentric with the ridge arrangement region 9. Here, the decorative band 55 forms the display part 5, together with emblems 56a, 56b to be described later.

The colored part 55a may also be formed by means of printing or painting of paint, or by means of so-called exposure of a color rubber embedded on a lower layer side of a cover rubber. In any of these cases, the colored part 55a is colored in a color including white and black, the color being different from the base color of the surface of the tire side portion 4.

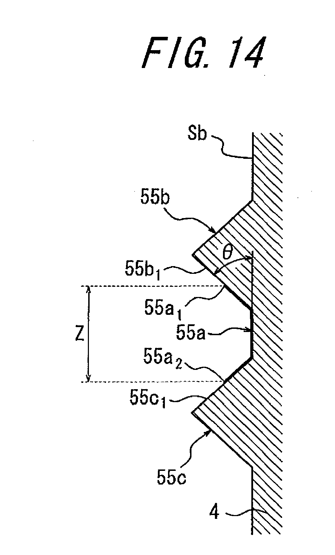

Then, the colored part 55a is formed, as illustrated in FIG. 14, to have the edges (an edge 55a₁ on the radially outside and an edge 55a₂ on the radially inside) of the colored part 55a each disposed on inclined surfaces 55b₁, 55c₁, respectively, the inclined surfaces being formed on the surface of the tire side portion 4 so as to produce a difference in height relative to surroundings thereof. In the example of FIG. 14, a pair of protrusions 55b, 55c that are triangular in section and annularly extending in the tire circumferential direction are formed on the tire side portion 4, and the inclined surfaces 55b₁, 55c₁ opposing to each other of the protrusions 55b, 55c each have the edges 55a₁, 55a₂ of the colored part 55a disposed thereon, respectively.

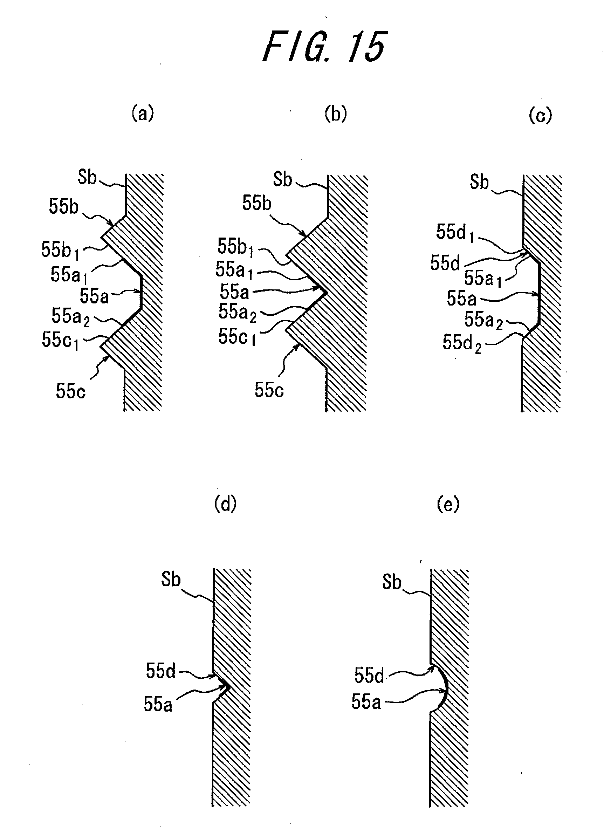

In FIG. 14, a region Z to be provided with the colored part 55a is formed equal to or higher than the height in the tire width direction of the surrounding surface (hereinafter, referred to as "reference surface") Sb of the protrusions 55b, 55c of the tire side portion 4. Alternatively, as illustrated in FIG. 15(a), the region Z to be provided with the colored part 55a may be formed, either entirely or partially, lower than the reference surface Sb, which allows the colored part 55a to be varied in brightness, either entirely or partially, so as to deliver a color gradation using the same ink or paint. Further, as illustrated in FIG. 15(b), the protrusions 55b, 55c may be disposed adjacent to each other so as to form a V-shaped groove therebetween, so that the colored part 55a is formed only on the protrusions 55b, 55c. Still further, as illustrated in FIGS. 15(c) to 15(e), the inclined surfaces 55d₁, 55d₂ opposing to each other may be formed by providing a recess 55d in the tire side portion 4. Here, the recess 55d may be in the form of a V-shaped groove or of an arc, as illustrated in FIGS. 15(d), 15(e).

In the tire configured as described above, the edges 55a₁, 55a₂ of the colored part 55a are each disposed on the inclined surfaces 55b₁, 55c₁, respectively, so that coloring disturbance such as irregularities in printing and painting to be generated on the edges 55a₁, 55a₂ of the colored part 55a is to be visually identified as being compressed due to the inclination of the inclined surfaces 55b₁, 55c₁, thereby making less noticeable the coloring disturbance at the boundaries of the colored part 55a. Further, the inclined surfaces 55b₁, 55c₁ can be formed by, for example, any ordinary vulcanization process, without causing an increase in cost. The inclined surfaces 55b₁, 55c₁ may preferably be inclined, relative to the reference surface Sb, at an inclination angle of θ falling within a range of 45° to 85° for ensuring the visual effect of making the disturbance less noticeable. Further, the inclination angle θ may more preferably be designed to fall within a range of 60° to 85° for the purpose of reducing manufacturing and printing irregularities in the process of coloring while obtaining the visual effect at the same time.

The colored part 55a may be provided either intermittently or continuously in the tire circumferential direction. In the latter case, high decorativity can be imparted, coupled with the annular shape of the tire. In this regard, the colored part 55a may preferably be disposed on the inner circumference side of the ridge arrangement region 9 and radially inside than the tire maximum width position *p*. With this configuration, the colored part 55a can be disposed radially inside than a position which suffers a large bending deformation in the tire side portion 4 when the tire is rolled under load, which can effectively prevent damages such as cracks from being caused to the colored part 55a, and also effectively eliminates the fear of abrasion of the colored part 55a to be caused by being rubbed against a curb or the like.

Further, this tire has the colored part 55a disposed on the inner circumference side of the ridge arrangement region 9 as being adjacent thereto, so that the visibility of an emblem disposed in the ridge arrangement region 9 or on the outer circumference side thereof can be increased, making the use of the decorativity of the colored part 55a.

Further, in this tire, the colored part 55a is made conspicuous, which gives an impression to the spectator as if the tire size is increased in diameter (which is so-called inch up).

Further, the colored part 55a may preferably be disposed between the emblem 56a rendering a brand name or a company name and the emblem 56b which is disposed radially outside than the rim line but radially inside than the emblem 56a and renders, relatively in a smaller font, a tire size or the like. With this configuration, the emblems each formed radially inside and outside of the colored part 55a can be emphasized by making the use of the high decorativity of the colored part 55a, to thereby increase the visibility of the emblems. In this embodiment, the emblem 56b is formed through printing an inside region edged by a concave-convex surface, similarly to the aforementioned emblem 51 c.

In the above, the present invention has been described with reference to the embodiments illustrated in the drawings. However, the present invention is not particularly limited to the aforementioned embodiments, and can be modified as appropriate without falling out of the scope of claims. For example, the protrusions 55b, 55c forming the inclined surfaces 55b₁, 55c₁ are not limited to be triangular in section, and may be in another shape such as a trapezoidal shape or an arc shape. Further, the decorative band is not limited to a color line, and may be formed of, for example, characters, graphics, and patterns. In this case, the edges of the decorative band may be disposed on the inclined surfaces, so as to make coloring irregularities less noticeable at the boundaries of the decorative band.

### REFERENCE SIGNS LIST

- 1: tread portion
- 2: sidewall portion
- 3: bead portion
- 4: tire side portion
- 5: display part
- 6: projection
- 6a: elongated protrusion
- 7: spew
- 8: ridge
- 9: ridge arrangement region
- 51a to 51c: emblem
- 52: decorative band
- 52a, 52b: side surface
- 52c, 52d: colored part
- 53: emblem
- 54: decorative band
- 54a: protrusion
- 54b: depression
- 54c: colored part
- 55: decorative band
- 55a: colored part
- 55b, 55c: protrusion
- 56a, 56b: emblem

## Claims

1. A tire comprising, on a tire side portion (4), a display part (5) having at least one of an emblem (51a-c, 53, 56a, 56b) and a decorative band (52, 54, 55),
wherein the emblem and the decorative band each are formed by means of any one of printing, painting, and a sticker; and
wherein the tire side portion has a projection formed in an area adjacent to the display part, the projection being formed as protruding from a surface of the display part while extending along the display part **characterised in that**
the decorative band (52, 54, 55) has an inclined surface (55b₁, 55c₁) that produces a difference in height relative to the tire side portion therearound, and is provided with a colored part (55a₁, 55a₂) different from surrounding rubber in color; and
wherein the colored part has edge (55a) thereof disposed on the inclined surface.

2. The tire according to claim 1, wherein the inclined surface is a side surface of the protrusion protrudingly formed on an outer surface of the tire side portion.

3. The tire according to claim 1 or 2, wherein the decorative band extends along a tire circumferential direction.

4. The tire according to any one of claims 1 to 3, wherein the emblem is disposed adjacent to the decorative band.

## Patentansprüche

1. Reifen, der, auf einem Reifenseitenabschnitt (4), einen Anzeigeteil (5) umfasst, der wenigstens eines von einem Emblem (51a-c, 53, 56a, 56b) und einem dekorativen Band (52, 54, 55) hat,
wobei das Emblem und das dekorative Band jeweils mit Hilfe eines beliebigen von einem Aufdruck, einer Bemalung und einem Aufkleber geformt sind und
wobei der Reifenseitenabschnitt einen Vorsprung hat, der in einem an den Anzeigeteil angrenzenden Bereich geformt ist, wobei der Vorsprung so geformt ist, dass er von einer Oberfläche des Anzeigeteils aus vorspringt, während er sich entlang des Anzeigeteils erstreckt, **dadurch gekennzeichnet, dass**
das dekorative Band (52, 54, 55) eine geneigte Oberfläche (55b₁, 55c₁) hat, die einen Unterschied in der Höhe im Verhältnis zu dem Reifenseitenabschnitt um dieselbe herum erzeugt, und mit einem farbigen Teil (55a) versehen ist, der sich in der Farbe von dem umgebenden Gummi unterscheidet, und
wobei der farbige Teil Kanten (55a₁, 55a₂) desselben hat, die auf der geneigten Oberfläche angeordnet sind.

2. Reifen nach Anspruch 1, wobei die geneigte Oberfläche eine Seitenfläche des Vorsprungs ist, der vorspringend auf einer Außenfläche des Reifenseitenabschnitts geformt ist.

3. Reifen nach Anspruch 1 oder 2, wobei sich das dekorative Band entlang einer Reifenumfangsrichtung erstreckt.

4. Reifen nach einem der Ansprüche 1 bis 3, wobei das Emblem angrenzend an das dekorative Band angeordnet ist.

## Revendications

1. Pneumatique comprenant, sur une partie latérale de pneu (4), une partie d'exposition (5) présentant au moins un sigle (51a-c, 53, 56a, 56b) et/ou une bande décorative (52, 54, 55),
le sigle et la bande décorative étant formés, chacun, par un moyen quelconque parmi une impression, une peinture et une étiquette adhésive ; et
la partie latérale de pneu présentant une saillie formée dans une zone adjacente à la partie d'exposition, la saillie étant formée comme faisant saillie par rapport à une surface de la partie d'exposition tout en s'étendant le long de la partie d'exposition, **caractérisé par le fait que**
la bande décorative (52, 54, 55) a une surface inclinée (55b₁, 55c₁) qui produit une différence de hauteur par rapport à la partie latérale de pneu située autour, et est pourvue d'une partie colorée (55a) d'une couleur différente du caoutchouc l'entourant ; et
la partie colorée ayant des bords (55a₁, 55a₂) disposés sur la surface inclinée.

2. Pneumatique selon la revendication 1, dans lequel la surface inclinée est une surface latérale de la saillie formée de manière saillante sur une surface extérieure de la partie latérale de pneu.

3. Pneumatique selon la revendication 1 ou 2, dans lequel la bande décorative s'étend le long d'une direction circonférentielle du pneu.

4. Pneumatique selon l'une quelconque des revendications 1 à 3, dans lequel le sigle est disposé de manière adjacente à la bande décorative.
